(19) Europäisches Patentamt
European Patent Office
Office européen des brevets

(11) EP 2 743 686 A1

(12) **EUROPEAN PATENT APPLICATION**
published in accordance with Art. 153(4) EPC

(43) Date of publication:
**18.06.2014 Bulletin 2014/25**

(51) Int Cl.:
*G01N 22/04* (2006.01)     *G01N 22/00* (2006.01)

(21) Application number: **12822405.2**

(86) International application number:
**PCT/JP2012/070566**

(22) Date of filing: **10.08.2012**

(87) International publication number:
**WO 2013/022104 (14.02.2013 Gazette 2013/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2011   JP 2011175491**

(71) Applicant: **Oji Holdings Corporation**
**Chuo-ku**
**Tokyo 104-0061 (JP)**

(72) Inventors:
• **SAWAMOTO Hidetada**
**Amagasaki-shi**
**Hyogo 660-8577 (JP)**
• **NAGATA Shinichi**
**Amagasaki-shi**
**Hyogo 660-8577 (JP)**

(74) Representative: **Zimmermann, Tankred Klaus et al**
**Schoppe, Zimmermann, Stöckeler**
**Zinkler & Partner**
**P.O. Box 246**
**82043 Pullach (DE)**

(54) **APPARATUS FOR MEASURING MOISTURE CONTENT AMOUNT AND/OR COATING AMOUNT OF COATING LAYER OF SHEET-SHAPED BASE MATERIAL**

(57)     A first isolator, which is disposed in a direction where a signal is transmitted only to an antenna direction, is connected directly to a connector portion of an antenna on an oscillation side without a cable, and a second isolator 15b, which is disposed in a direction where a signal is transmitted only to a receiver direction, is connected directly to the connector portion of the antenna on a receiver side without a cable. A data processing apparatus includes a peak level detector, a resonant frequency detector, and an arithmetic part for calculating a moisture content amount and a coating amount of a coating layer of a sample based on the detection values detected by these detectors.

Fig. 4

**Description**

TECHNICAL FIELD

The present invention relates to an apparatus for measuring a moisture content amount and a coating amount of a sample provided with a coating layer obtained by applying a coating solution to a base material of a sheet-shaped material including paper, non-woven fabric, and film using resonance of microwaves.

BACKGROUND ART

Measurement of a moisture content amount and measurement of a coating amount are very important not only in the paper industry but also in respective manufacturing industries, and thus, there is a great need for heightening measurement accuracy from a viewpoint of quality control.

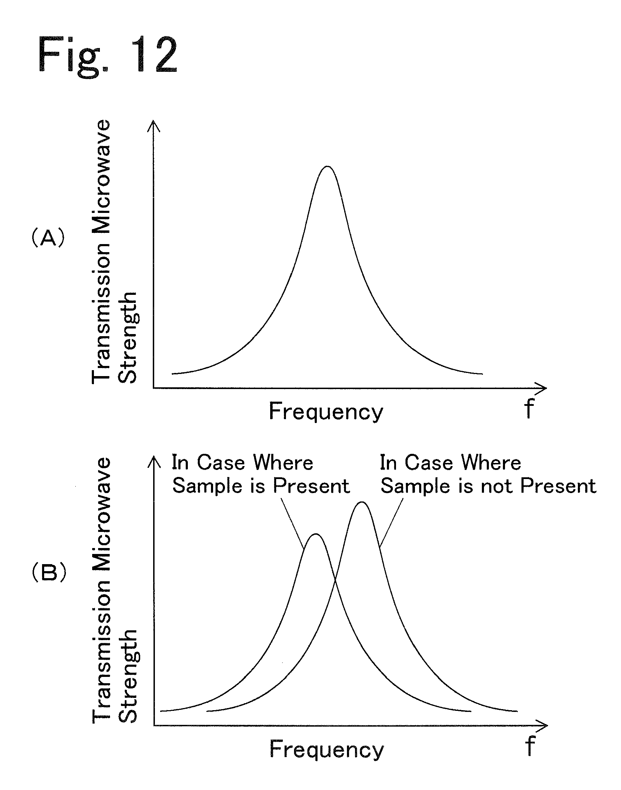

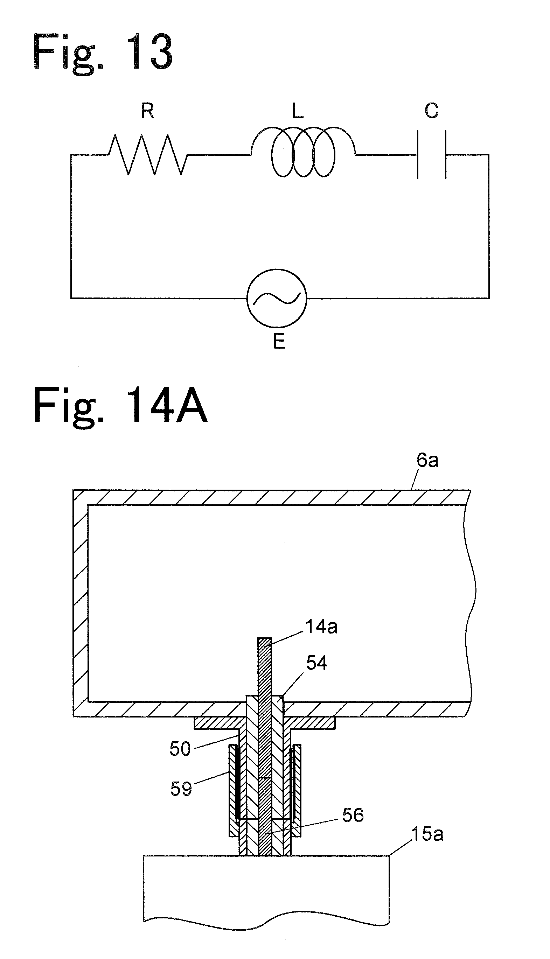

As one means for measuring a moisture content amount and a coating amount of a sheet-shaped material, a method using a microwave resonator is known. When a frequency of microwaves incident on the resonator is continuously changed while transmitted microwave strength at that time is detected, a resonance curve show in Fig. 12(A) is obtained. When a sample is placed inside or near the resonator, the resonance curve changes as shown in Fig. 12(B). This phenomenon can be described in a form of an electric circuit according to the theory of an LCR resonance circuit composed of an inductance L, a capacitance C and a resistor R shown in Fig. 13. For example, in a microwave cavity resonator, a reactance component and a capacitance component, which are created by iris, and further, a resistance part of a waveguide wall form the LCR resonance circuit. A dielectric constant of a sample is related to a capacity C, and a dielectric loss rate is related to a resistor R. This state is equivalent to coupling among L, C, and R of the resonator via electromagnetic coupling. Therefore, when a sample is present, the capacitance C increases, and a resonant frequency f ($f = 1/\{2\pi(LC)^{1/2}\}$ decreases. At the same time, the resistor R is also increased by the dielectric loss rate of the sample, a peak level reduces, and a Q value, namely, resonance sharpness also becomes low. This phenomenon can be described according to perturbation theory, but the description about this is omitted.

Patent Document 1 describes methodology and apparatus for inserting a sample into a microwave cavity resonator and measuring a moisture content amount of the sample based on a variation of a resonance peak level before and after the sample is inserted. This is because since water has a larger dielectric loss rate than the other substances, the variation of the resonance peak level depends only on a product of a dielectric loss rate of water and an amount of water.

Patent Document 2 describes methodology and apparatus for arranging a sample on a dielectric resonator under a constant condition and measuring a basis weight of the sample based on a difference in the resonant frequency between cases where the sample is present and is not present, and measuring a moisture content amount of the sample based on a difference in a resonance peak level between the cases. A shift amount of the resonant frequency (a difference in the resonant frequency between the cases where the sample is present and is not present) is expressed by a product of a constant including the dielectric constant of the sample and the basis weight of the sample (or a thickness). The basis weight of the sample is measured based on a calibration curve created by using a sample with known basis weight.

Patent Document 2 refers to a moisture content amount measuring method where attention is paid to the moisture content amount of a coating layer in a case where a multi-layered coating layer is provided, and its influence is taken into consideration. However, since actually a coating solid content in the coating layer also has a dielectric loss rate, a variation in a resonance peak level is influenced also by the dielectric loss rate of the coating solid content and its absolute amount. Further, since water included in the coating layer has not only a large dielectric loss rate but also a large dielectric constant, a resonant frequency shift amount is also influenced by the dielectric constant of water and its absolute amount. That is to say, in order to measure the moisture content amount and the coating amount more accurately, it is important to carry out measurement with effects of the dielectric constants and the dielectric loss rate of water and the coating solid content included in the coating layer being taken into consideration.

Patent Document 3 proposes the following measuring method. In this method, a resonant frequency and a resonance peak level of a reference sample whose moisture content amount and coating amount are known are measured, and coefficients $K_1$ and $K_2$ are determined in characteristic equations expressed by formulas (1) and (2), described later, between an amount $\Delta V_w$ of water and an amount $\Delta Vc$ of a coating solid content in a coating layer being increased by coating and a change $\Delta f$ in the resonant frequency and a change $\Delta W$ in the resonance peak level caused by presence/non-presence of the coating layer. Thereafter, a resonant frequency and a resonance peak level of a sample to be measured whose moisture content amount and coating amount are unknown are measured, and their simultaneous characteristic equations are held so that $\Delta V_w$ and $\Delta V_c$ of the sample to be measured are calculated. As a result, a moisture content amount and a coating amount of the sample to be measured are obtained.

Patent Document 3 further proposes a method for creating a calibration curve according to these characteristic equations and obtaining the moisture content amount and coating amount of a sample to be measured using the calibration curve instead of the method for determining the coefficients $K_1$ and $K_2$.

PRIOR ART DOCUMENTS

PATENT DOCUMENTS

Patent Document 1: International Publication No. WO2005/012887
Patent Document 2: Japanese Patent Laid-Open Publication No. 2006-349425
Patent Document 3: Japanese Patent Laid-Open Publication No. 2009-58379
Patent Document 4: Japanese Patent Laid-Open Publication No. 5-80003 (1993)

SUMMARY OF THE INVENTION

PROBLEMS TO BE SOLVED BY THE INVENTION

Since both coefficients $K_1$ and $K_2$ in the characteristic equations, and calibration curve instead of them are apparatus constants, the coefficients $K_1$ and $K_2$, and the calibration curve of the reference sample do not change as long as the same measuring apparatus is used. However, actually when an installation place of the measuring apparatus is moved, an influence of external electromagnetic waves to be exerted on the measuring apparatus changes, and a cable for connecting both of them is replaced by one with a different length since a distance between the microwave cavity resonator and a data processing apparatus changes. When a measurement environment changes in such a manner, reproducibility of the measured result is deteriorated, and thus, the coefficients $K_1$ and $K_2$ or the calibration curve of the same reference sample should be redetermined.

It is an object of the present invention to provide a measuring apparatus which has a constitution in that a change in the measurement environment does not deteriorate the reproducibility of a measured result.

SOLUTIONS TO THE PROBLEMS

As a result of examining various countermeasures for preventing the deterioration in the reproducibility of a measured result even when a measured environment is changed, it is found that a cable for connecting a microwave cavity resonator and a data processing apparatus causes the deterioration in the reproducibility of a measured result. Normally, when the measuring apparatus is installed, a reference sample and an unknown sample are measured in that state. For this reason, the cable does not cause a deterioration in the reproducibility of the measured result as long as a great environmental change such as a movement of the measuring apparatus does not occur. For this reason, attention has not been paid to such a problem.

In the present invention, it is found that an isolator is inserted between a microwave cavity resonator and a cable as a countermeasure against this problem that is found to be caused by a cable, and reflection of microwaves from the cable to the microwave cavity resonator is prevented so that this problem can be solved.

According to views of inventors of the present invention, details of this problem are as follows. Microwaves that reach the microwave cavity resonator from the cable resonate in the cavity resonator. Some of them, however, return to the cable and are transmitted to an opposite direction in the cable so as to be reflected from an end on the opposite side of the cable and again go towards the microwave cavity resonator. The reflected microwaves again enter the cavity resonator. The reflected waves have an influence on a resonance state in the microwave cavity resonator, and a resonance state different from the original resonance state, that is, a state where the reflected waves interfere is detected. Since a phase of reflected waves shifts from the microwaves firstly reaching to the microwave resonator depending on the length of the cable, a measured value is changed only by a small change in the length of the cable.

The isolator is well known, but when the moisture content amount and the coating amount or the basis weight are measured by using the microwave cavity resonator, an isolator is not used for improving the reproducibility of the measured result. This is mainly because the above problem is not noticed and is regarded not to arise, and an element that obviously causes a high cost is not particularly added. Further, this is because this problem is recognized this time, but various examinations are needed to find that the isolator is effective for solving this problem.

An apparatus is proposed for measuring a moisture content amount and a basis weight of paper using the microwave cavity resonator in which an isolator is used not for improving reproducibility of a measured result but for preventing an oscillator from being damaged by reflected microwaves (see Patent Document 4). In this apparatus, the isolator is arranged between the oscillator and a distributor for distributing microwaves from the oscillator to a plurality of microwave cavity resonators. For this reason, since the distributor is provided between the isolator and the microwave cavity resonator, a cable is provided between the isolator and the distributor and a cable is provided between the distributor and the microwave cavity resonator. This constitution corresponds to a constitution illustrated as a comparative example, described later, and does not have an effect for improving the reproducibility of a measured result. Further, since this proposed apparatus is for preventing the oscillator from being damaged, an isolator is not provided to a receiver side that is not provided with the resonator.

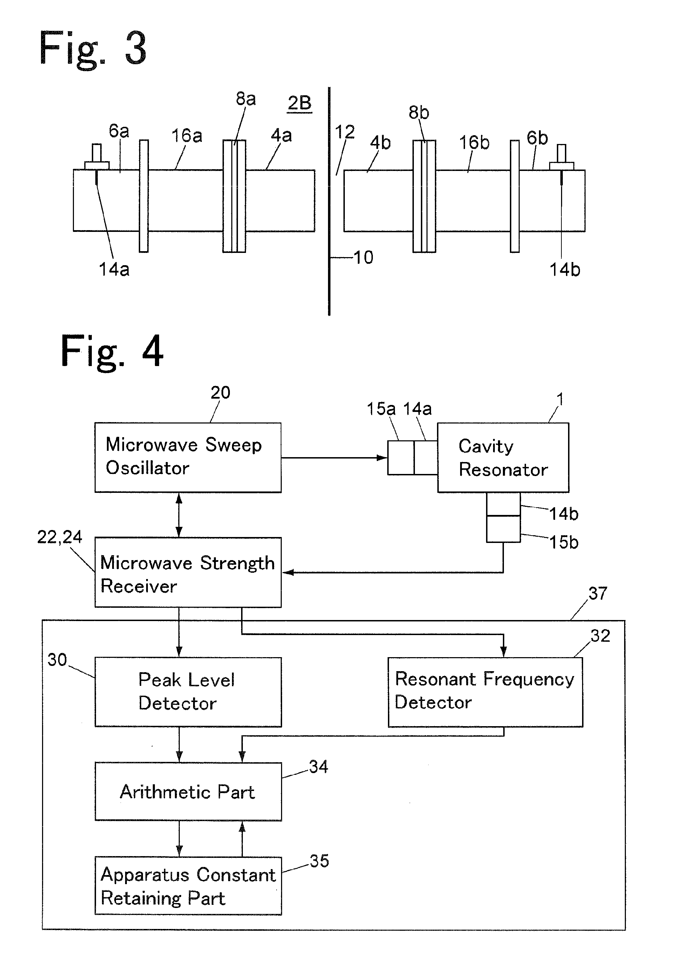

The present invention that is devised in such a manner is schematically illustrated in Fig. 4. A microwave cavity resonator 1 has two iris plates with a hole in a middle of a waveguide with the iris plates being vertical to a tube axis. A space between the iris plates is a resonator portion, and waveguide portions on the outside of the iris plates are first and second traveling wave portions with an antenna, and a slit where a sheet-shaped sample is disposed is provided to the resonator portions so as to cross the waveguide. A microwave sweep oscillator 20 for oscillating with a frequency within a predetermined range is connected to the side of the first traveling wave portion, and microwave strength receivers 22 and 24 are connected to the side of the second traveling wave portion. A first isolator 15a is provided between the first traveling wave portion and the microwave sweep oscillator 20. The first isolator 15a is disposed in a direction where a signal is transmitted only to a direction of an antenna 14a of the first traveling wave portion from the microwave sweep oscillator 20 and is connected directly to a connector portion of the antenna 14a of the first traveling wave portion without a cable. A second isolator 15b is provided between the second traveling wave portion and the microwave strength receivers 22 and 24. The second isolator 15b is disposed in a direction where a signal is transmitted only to a direction of the microwave strength receivers 22 and 24 from an antenna 14b, and is connected to a connector portion of the antenna 14b of the second traveling wave portion without a cable.

A data processing apparatus 37 includes a peak level detector 30 for receiving the signals from the microwave strength receivers 22 and 24 so as to detect a peak level with a resonant frequency, a resonant frequency detector 32 for receiving the signals from the microwave strength receivers 22 and 24 so as to detect a resonant frequency, and an arithmetic part 35 for obtaining a moisture content amount and a coating amount of a coating layer based on a difference in the peak level detected by the peak level detector 30 between a sample where the coating layer is provided on a surface of a sheet-shaped base material and a sample that is not provided with the coating layer and a difference in the resonant frequency detected by the resonant frequency detector 32 between the samples.

As a preferable mode, the data processing apparatus 37 includes an apparatus constant retaining part 35. In a first embodiment, the apparatus constant retaining part 35 retains coefficients for obtaining a moisture content amount and a coating amount of a coating layer as apparatus constants. The arithmetic part 35 calculates the moisture content amount and the coating amount of the coating layer using the peak level detection value detected by the peak level detector 30 at the measurement of an unknown sample and the resonant frequency detected by the resonant frequency detector 32 and the coefficients retained in the apparatus constant retaining part 35.

The coefficients as the apparatus constants for obtaining the moisture content amount and the coating amount of the coating layer are the following values $K_1$ and $K_2$. That is to say, the resonant frequency and the resonance peak level of the reference sample whose moisture content amount and coating amount are already known are measured, and the following characteristic equations (1) and (2) are completed for $\Delta V_w$ (an amount of water being increased by coating) and $\Delta Vc$ (an amount of the coating solid content in the coating layer).

$$\Delta f = K_1[(\varepsilon'_w - 1)\Delta V_w + (\varepsilon'_c - 1)\Delta V_c] \cdots (1)$$

$$\Delta W = K_2(\varepsilon''_w \times \Delta V_w + \varepsilon''_c \times \Delta V_c] \cdots (2)$$

Here,

$$\Delta f = f_b - f_s,$$

$f_b$: the resonant frequency of the sheet-shaped base material,
$f_s$: the resonant frequency of the sample provided with the coating layer,

$$\Delta W = P_b - P_s,$$

$P_b$: the resonance peak level of the sheet-shaped base material
$P_s$: the resonance peak level of the sample provided with the coating layer,
$\varepsilon'_w, \varepsilon'_c$: the dielectric constants of water and coating solid content,
$E''_w, \varepsilon''_c$: the dielectric loss rate of the water and the coating solid content.

The coefficients $K_1$ and $K_2$ are determined for the reference sample, and they are stored in the apparatus constant retaining part 35 of the data processing apparatus 37. In the present invention, even when the measurement environment changes, the coefficients $K_1$ and $K_2$ do not change. For this reason, thereafter the resonant frequency and the resonance peak level of an unknown sample to be measured whose moisture content amount and coating amount are unknown are measured, and the characteristic equations are simultaneously completed so that $\Delta V_w$ and $\Delta V_c$ of the sample to be measured are calculated. As a result, the moisture content amount and the coating amount of the sample to be measured can be obtained.

In a second mode, instead of the coefficients $K_1$ and $K_2$ as the apparatus constants in the first embodiment, calibration curve data is stored as the apparatus constants in the apparatus constant retaining part 35 of the data processing apparatus. Also in the second mode, similarly to the first mode, the resonant frequency and the resonance peak level of a reference sample whose moisture content amount and coating amount are known are measured, and a calibration curve is created according to the characteristic equations (1) and (2) for $\Delta V_w$ and $\Delta V_c$. The calibration curve data is stored as the apparatus constants in the apparatus constant retaining part 35. Thereafter, similarly to the first mode, the resonant frequency and the resonance peak level of the sample to be measured whose moisture content amount and coating amount are unknown are measured. The amount $\Delta V_w$ and the amount $\Delta V_c$ of the sample to be measured are calculated based on the calibration curve data stored in the apparatus constant retaining part 35, so that the moisture content amount and the coating amount of sample to be measured can be obtained.

EFFECTS OF THE INVENTION

In the measuring apparatus of the present invention, the isolators are provided directly on the connector portion of the antenna of the first traveling wave portion and the connector portion of the antenna of the second traveling wave portion without a cable, and cables are connected to the data processing apparatus via the isolators. For this reason, the reproducibility of the measured result at the time of measuring the moisture content amount and the coating amount of the sample can be improved by using the microwave resonator based on a difference in the resonance peak level and a difference in the resonant frequency between the sheet-shaped base material and the sample where the coating layer is provided onto the base material.

BRIEF DESCRIPTION OF THE DRAWINGS

Fig. 1 is a schematic constitutional diagram illustrating a measuring apparatus for a moisture content amount and a coating amount according to one embodiment.
Fig. 2 is a schematic constitutional diagram illustrating a first example of a microwave cavity resonator to be used in the present invention.
Fig. 3 is a schematic constitutional diagram illustrating a second example of the microwave cavity resonator to be used in the present invention.
Fig. 4 is a block diagram illustrating the measuring apparatus for the moisture content amount and the coating amount according to one embodiment.
Fig. 5 is a constitutional diagram illustrating one example of the measuring apparatus for carrying out the constitution of the block diagram shown in Fig, 4.
Fig. 6 is a time chart diagram illustrating an operation of the embodiment in the block diagram shown in Fig. 4.
Fig. 7 is a diagram illustrating resonance curves obtained at a time of measuring a sample in three states by the microwave cavity resonator.
Fig. 8 is a cross sectional view virtually illustrating a layer structure in a case where a coating layer is provided to a base material.
Fig. 9 is a graph illustrating one example of a relationship between a dielectric constant and a resonant frequency shift amount.
Fig. 10 is a graph illustrating one example of a relationship of changes in the dielectric loss rate and the resonance peak level.
Fig. 11 is a flowchart illustrating a measuring step and a calculating steep according to one embodiment.
Fig. 12(A) is a diagram illustrating a resonance curve obtained by resonance of the microwave cavity resonator, and Fig. 12(B) is a diagram illustrating a change in the resonance curve due to presence/non-presence of a sample.
Fig. 13 is an equivalent circuit diagram describing a principle of the resonance of the microwave cavity resonator.
Fig. 14A is a cross sectional view illustrating a state that an isolator is connected directly to an antenna of a waveguide portion of the microwave cavity resonator.
Fig. 14B is an exploded diagram of the connecting portion shown in Fig. 14A.

EMBODIMENTS OF THE INVENTION

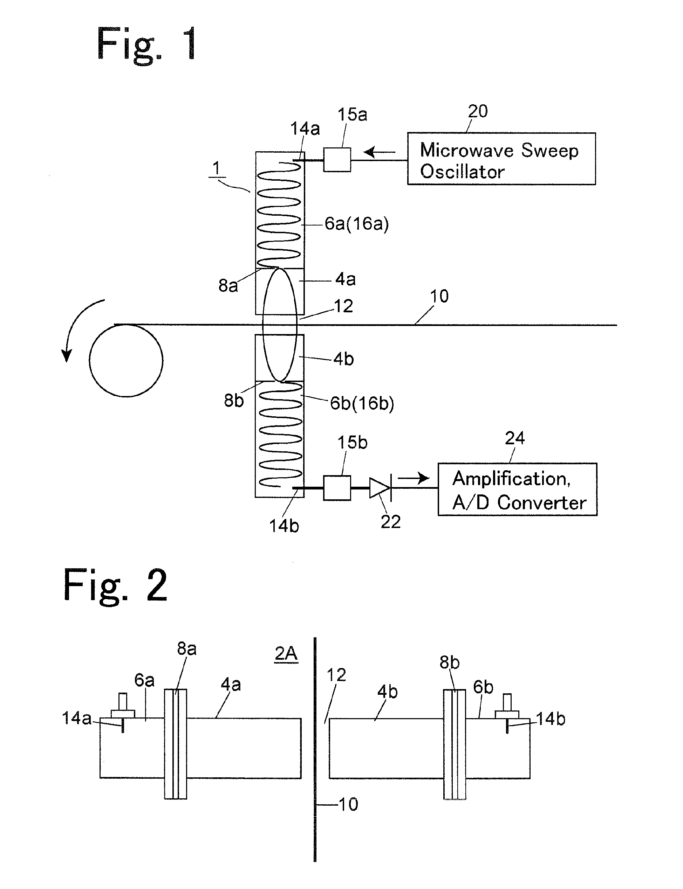

Fig. 1 illustrates an outline of a measuring apparatus for a moisture content amount and a coating amount according to one embodiment. A sample 10 is allowed to contact with or be close to a microwave cavity resonator 1 to travel, and a resonance peak level is measured at real time. The microwave cavity resonator 1 is shown in Fig. 2 or Fig. 3. In the microwave cavity resonator in Fig. 2, a waveguide 2A is composed of waveguide portions 4a, 4b, 6a and 6b, and two iris plates 8a and 8b, on which a hole is made are provided vertically to a tube axis, in the middle of the waveguide 2A. Portions between the iris plates 8a and 8b are resonator portions 4a and 4b, and outsides of the iris plates 8a and 8b are traveling wave portions 6a and 6b. A slit 12 where the sample 10 is disposed is provided so as to cross the resonator portions 4a and 4b. One traveling wave portion 6a is connected with a microwave sweep oscillator for oscillating with a frequency within a predetermined range between 1 to 25 GHz via an isolator, the other traveling wave portion 6b is connected with a microwave strength receiver via an isolator. Symbols 14a and 14b denote antennas provided to the traveling wave portions 6a and 6b, respectively, the antenna 14a is connected to the microwave sweep oscillator via an isolator, and the antenna 14b is connected to the microwave strength receiver via an isolator.

In the microwave cavity resonator in Fig. 3, a waveguide 2B is composed of waveguide portions 4a, 4b, 4a, 4b, 16a and 16b. One of the paired traveling wave portions is composed of the waveguide portion 16a adjacent to the one iris plate 8a, and the waveguide portion 6a that is connected to the waveguide portion 16a and is connected to the microwave sweep oscillator via the isolator. The other traveling wave portion is composed of the waveguide portion 16b adjacent to the other iris plate 8b, and the waveguide portion 6b that is connected with the waveguide portion 16b and is connected to the microwave strength receiver via the isolator.

The microwave cavity resonator in Fig. 3 is different from the microwave cavity resonator in Fig. 2 in that the waveguide portion 16a is further disposed between the waveguide portion 6a of the traveling wave portion connected to the microwave sweep oscillator and the iris plate 8a, and the waveguide portion 16b is further disposed between the waveguide portion 6b of the traveling wave portion connected to the microwave strength receiver and the iris plate 8b. Both the waveguide portions 16a and 16b are the traveling wave portions.

As schematically illustrated in Fig. 1, one hole is made on the tube axis of each waveguide in each of the two iris plates 8a and 8b with holes provided vertically to the tube axis in the middle of the waveguide. The portions between the iris plates 8a and 8b are the resonator portions 4a and 4b, and the slit 12 where the sample 10 is disposed is provided so as to cross the resonator portions 4a and 4b.

The slit 12 is disposed on a position where electric field vectors of the resonator portions 4a and 4b are largest. Since the sample 10 passes through the slit 12, the slit 12 is preferably made narrow within a range where the sample 10 is not prevented from passing therethrough.

The outsides 6a and 6b of the iris plates 8a and 8b (including the waveguide portions 16a and 16b in the case of Fig. 3) are the traveling wave portions. An antenna 14a for excitation is provided to the traveling wave portion 6a, and a microwave sweep oscillator 20 for oscillating with a frequency within a predetermined range between 1 to 25 GHz is connected to the antenna 14a via the isolator 15a. The antenna 14b is provided to the traveling wave portion 6b, and the microwave strength receiver composed of a wave detector 22, an amplifier and an A/D (analog/digital) converter 24 is connected to the antenna 14b via the isolator 15b.

The isolator 15a is disposed in a direction where a signal is transmitted only to the antenna 14a from the microwave sweep oscillator 20, and is connected directly to a connector portion of the antenna 14a without a cable. The isolator 15b is disposed in a direction where a signal is transmitted only to the microwave strength receiver from the antenna 14b, and is connected directly to the connector portion of the antenna 14b without a cable.

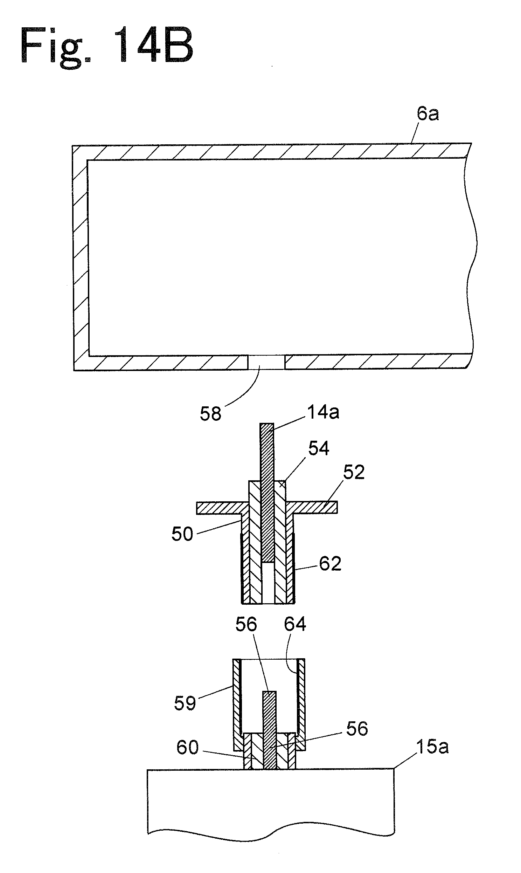

Fig. 14A illustrates an example of a portion where the isolator is connected directly to the connector portion of the antenna. Fig. 14B is an exploded diagram of the example. Both Fig. 14A and 14B are cross sectional views. Fig. 14A illustrates the connecting portion of the isolator 15a on the oscillator side, but since the connecting portion of the isolator 15b on the receiver side has the completely same structure, illustration and description of the receiver side are omitted.

The antenna 14A is retained in a connector portion 50. The connector portion 50 is made of metal, and has a cylindrical main body, and is provided with a flange 52 at a front end side to be mounted to the waveguide portion 6a. The antenna 14A is held by a cylindrical sleeve 54 made of insulating resin, and the sleeve 54 is inserted into a cylindrical hole of the connector portion 50, so that the antenna 14A is fixed and held into the hole of the connector portion 50 by the sleeve 54.

A front edge of the sleeve 54 protrudes from the flange 52, and the front edge of the antenna 14A protrudes more than the front edge of the sleeve 54. An outer diameter of the sleeve 54 protruding from the flange 52 corresponds to a size of a hole 58 of the waveguide portion 6a for mounting the antenna. When the front edge of the antenna 14A is inserted into the hole 58 of the waveguide portion 6a, the sleeve 54 is fitted into the hole 58, and the flange 52 contacts with an outer surface of the waveguide portion 6a. Since the waveguide portion 6a and the connector portion 50 are made of metal, both of them are electrically conductive with each other.

The sleeve 54 is inserted up to a base end of the connector portion 50. A base end of the antenna 14a is inserted to a middle position on the base end side of the sleeve 54, and contacts with a connecting terminal 56 of the isolator 15a in the sleeve 54 to be electrically connected to the connecting terminal 56.

The connecting terminal 56 of the isolator 15a is provided so as to protrude from the isolator 15a. In order to connect the connecting terminal 56 to the antenna 14a, the isolator 15a is provided with a cylindrical connector portion 59 made of metal that surrounds a side of the connecting terminal 56. The connecting terminal 56 and the connector portion 59 are electrically insulated from each other by an insulating member 60 made of resin. A front edge of the connecting terminal 56 is set on a position lower than a front edge of the connector portion 59.

In order to connect the connector portion 59 of the isolator 15a to the connector portion 50 of the antenna 14a, a male thread 62 is provided onto an outer peripheral surface of the connector portion 50, and a female thread 64 is provided onto an inner peripheral surface of the connector portion 59. The threads 62 and 64 are screwed together so that the connector portion 50 is connected with the connector portion 59, and the base end of the antenna 14a and the connecting terminal 56 of the isolator 15a contact and are electrically connected with each other in the sleeve 54.

The connector portions 50 and 59 are not particularly limited, but for example, a SMC type connector according to the MIL/IEC standard can be used.

The isolators 15a and 15b are not particularly limited, but for example, a Y-circulator type isolator, a Faraday rotation type isolator, or a resonance type isolator can be used.

The amplifier and the A/D converter 24 of the microwave strength receiver are connected to a data processing apparatus 37. The data processing apparatus 37 includes a peak level detector 30, a resonant frequency detector 32, an arithmetic part 34, and an apparatus constant retaining part 35 as shown in Fig. 4. The peak level detector 30 receives a signal from the microwave strength receiver so as to detect a peak level with a resonant frequency. The resonant frequency detector 32 receives a signal from the microwave strength receiver so as to detect a resonant frequency. The arithmetic part 34 calculates the moisture content amount and the coating amount of the coating layer. The apparatus constant retaining part 35 retains an apparatus constant at a time when the arithmetic part 34 calculates the moisture content amount and the coating amount of the coating layer.

In the first embodiment, the apparatus constant retaining part 35 retains the coefficients K1 and K2 as apparatus constants for obtaining the moisture content amount and the coating amount of the coating layer based on the difference in the peak level detected by the peak level detector 30 and the difference in resonant frequency detected by the resonant frequency detector 32 between the sample provided with the coating layer on the surface of the sheet-shaped base material and the sample that is not provided with the coating layer. In this embodiment, the arithmetic part 34 calculates the moisture content amount and the coating amount of the coating layer according to the formulas (1) and (2) using the peak level detection value detected by the peak level detector 30 and the resonant frequency detected by the resonant frequency detector 32 at the time of measuring an unknown sample and the coefficients K1 and K2 that are retained in the apparatus constant retaining part 35.

In a second embodiment, the apparatus constant retaining part 35 retains the calibration curve data as apparatus constants for obtaining the moisture content amount and the coating amount of the coating layer based on the difference in the peak level detected by the peak level detector 30 and the difference in resonant frequency detected by the resonant frequency detector 32 between the sample provided with the coating layer on the surface of the sheet-shaped base material and the sample that is not provided with the coating layer. In this mode, the arithmetic part 34 calculates the moisture content amount and the coating amount of the coating layer using the peak level detection value detected by the peak level detector 30 and the resonant frequency detection value detected by the resonant frequency detector 32 at the time of measuring the unknown sample and the calibration curve data retained in the apparatus constant retaining part 35.

A microwave output from the microwave sweep oscillator 20 is transmitted only to the direction of the antenna 14a by the isolator 15a so as to enter the cavity resonator 1. The microwave that enters the cavity resonator 1 passes through the hole of the iris plate 8a, and is guided to the resonator portions 4a and 4b through the hole of the iris plate 8a so as to be resonated by the resonator portions 4a and 4b. Some of the microwaves that resonate in the resonator portions 4a and 4b pass through the hole of the iris plate 8b and are detected by the antenna 14b. The microwaves detected by the antenna 14b are transmitted from the antenna 14b only to a diode 22 by the isolator 15b, and a resonance level is detected by amplification and the A/D converter 24. When the sample 10 is placed on or made to be close to the slit 12 of the resonator portions 4a and 4b, the resonant frequency changes according to a dielectric constant of the sample 10, and the peak level changes according to a dielectric loss rate.

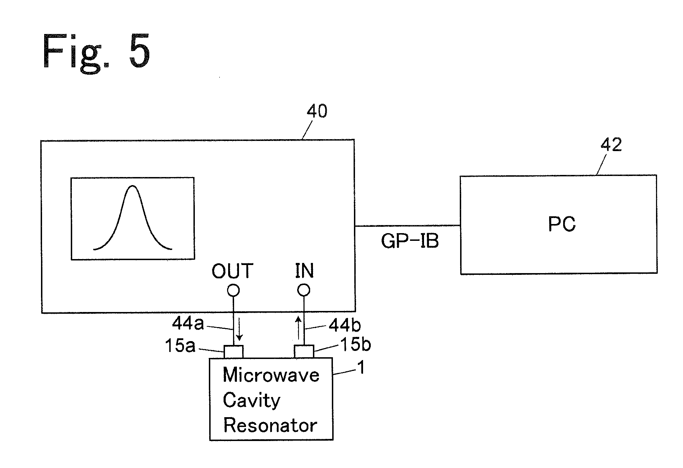

As one example for realizing the constitution of Fig. 4, as shown in Fig. 5, the cavity resonator 1 and a vector network analyzer 40 are connected by cables 44a and 44b. The isolators 15a and 15b are provided onto the side of the cavity resonator 1, and the cables 44a and 44b are connected to the cavity resonator 1 via the isolators 15a and 15b, respectively. The vector network analyzer 40 contains the microwave sweep oscillator 20 on its "OUT" side, and microwave strength receivers 22 and 24 on its "IN" side. The microwaves from the microwave sweep oscillator 20 are supplied from an "OUT" terminal via the cable 44a and the isolator 15a to the antenna 14a of the cavity resonator 1 (see Fig. 1).

The microwave detected by the antenna 14b of the cavity resonator 1 (see Fig. 1) are transmitted from the "IN" terminal via the isolator 15b and the cable 44b to the microwave strength receivers 22 and 24 in the vector network analyzer 40.

The vector network analyzer 40 realizes a function of the data processing apparatus 37. However, the data processing apparatus 37 can be realized by a personal computer 42 or by another computer.

The vector network analyzer 40 transmits a peak level of a resonance curve as data to the personal computer 42 using a GP-IB interface in an $S_{21}$ mode, and the personal computer 42 can calculate the moisture content amount and the coating amount at real time. Further, when a sheet-shaped sample is conveyed by a conveying system, the resonator 1 is placed for the sample in the conveying state under a constant condition. As a result, while the samples are being conveyed sequentially into or near the resonator 1, measurement is carried out so that the online measuring apparatus can be constituted. The $S_{21}$ mode represents a direction of S parameters of four terminal constants of the network analyzer, and means that transmission measurement is carried out at two ports 1 and 2 in a direction from 1 to 2.

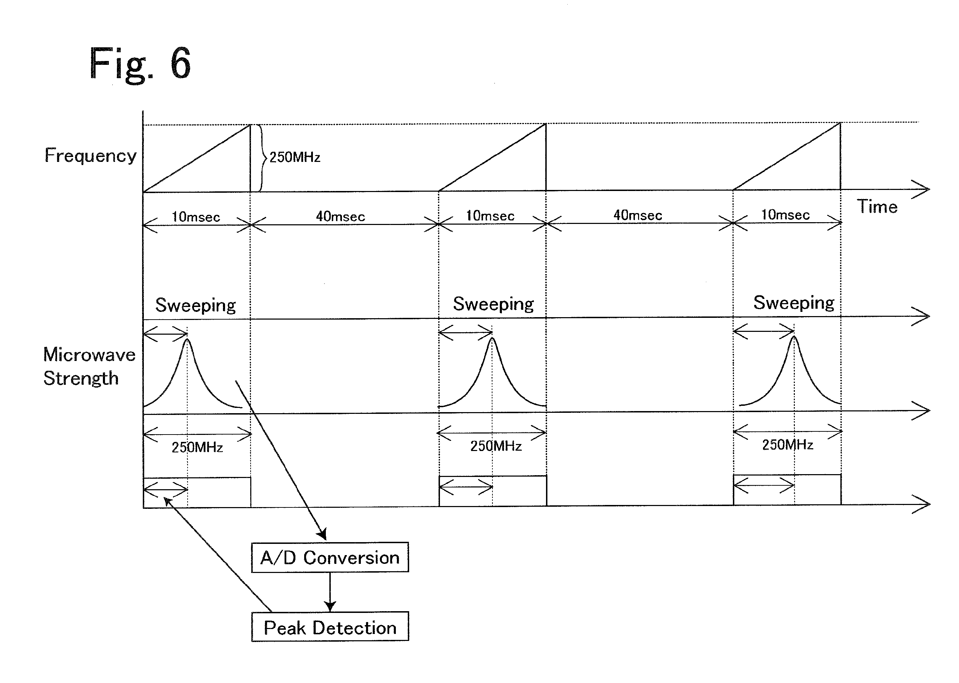

A resonance level detected by the antenna 14b is converted into a voltage by the wave detecting diode 22 in the vector network analyzer 40. Thereafter, as shown in Fig. 6, the converted voltage is guided to the data processing apparatus 37 through the amplification and an A/D converting process by means of the A/D converter 24. In the data processing apparatus 37, 100000 data are captured during sweeping and simultaneously the peak level detector 30 detects a maximum value (peak level). The resonant frequency detector 32 detects the resonant frequency. This process is repeated at about every 50 milliseconds. In the actual measurement, the peak level occasionally fluctuates due to various noises, the stable measurement can be carried out by an averaging process.

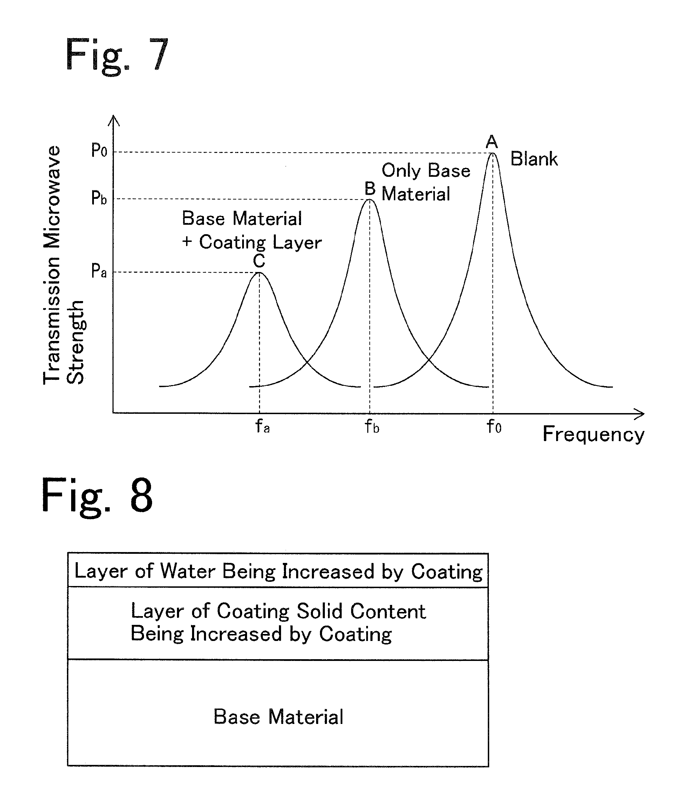

In this embodiment, the water and the coating solid content included in the coating layer are separated and their amounts are measured by using the resonance curves shown in Fig. 7. Fig. 7 is a diagram illustrating resonance curves obtained at the time of measuring the sample through the microwave cavity resonator in three types of states. The diagram illustrates a resonance curve A that is a resonance curve to be obtained at a blank time when the sample is not present, a resonance curve B that is a resonance curve obtained when only a base material is measured, and a resonance curve C that is a resonance curve obtained when the coating layer is present in the base material. Contribution components of the water and the coating solid content included in the coating layer are separated, and influences of their amounts, the dielectric constants and the dielectric loss rates to be exerted on the resonant frequency shift amount and the resonance peak level variation are accurately obtained based on a relationship between these resonance curves.

Measuring principles of the moisture content amount and the coating amount in the present invention are described below. When the sheet-shaped base material which is not provided with the coating layer is placed inside or near the microwave resonator, the resonance curve A is changed into the resonance curve B in Fig. 7. The resonance curve A is the resonance curve in a case without a base material. A resonant frequency shift amount $\Delta f_b$ and a resonance peak level variation $\Delta W_b$ at this time can be expressed as follows.

$$\Delta f_b = f_0 - f_b = K_1 \times (\varepsilon'_b - 1)\Delta V_b \cdots (1a)$$

$$\Delta W_b = P_0 - P_b = K_2 \times \varepsilon''_b \Delta V_b \cdots (2a)$$

$\varepsilon'_b$: the dielectric constant of the base material
$\varepsilon''_b$: the dielectric loss rate of the base material
$\Delta V_b$: the amount of the base material (per measurement area)
$f_o$: the resonant frequency in the case without the base material (blank)
$f_b$: the resonant frequency in the case with the base material
$P_o$: the resonance peak level in the case without the base material (blank)
$P_b$: the resonance peak level in the case with the base material
$\Delta f_b$: the resonant frequency shift amount between the base material and blank
$\Delta W_b$: the resonance peak level variation between the base material and blank
$K_1$, $K_2$: proportionality constant

When the sample provided with the coating layer on the same base material is placed inside or near the resonator, a change occurs like the resonance curve C in Fig. 7. At this time, when it is assumed that the sample provided with the coating layer has a multi-layered structure composed of the base material, a layer of water increased due to coating and a layer made of coating solid content increased due to coating as virtually shown in Fig. 8, the resonant frequency shift amount $\Delta f_s$ and a variation $\Delta W_s$ of the resonance peak level at this time can be expressed as follows. Fig. 8 is a cross sectional view virtually illustrating the layer structure where the coating layer is provided onto the base material.

$$\Delta f_s = f_0 - f_s = K_1[(\varepsilon'_b - 1)\Delta V_b + (\varepsilon'_w - 1)\Delta V_w + (\varepsilon'_c - 1)\Delta V_c] \cdots (3)$$

$$\Delta W_s = P_0 - P_s = K_2 \times (\varepsilon''_b \Delta V_b + \varepsilon''_w \Delta V_w + \varepsilon''_c \Delta V_c) \cdots (4)$$

$\varepsilon'_w$: the dielectric constant of water
$\varepsilon''_w$: the dielectric loss rate of the water
$\varepsilon'_c$: the dielectric constant of the coating solid content
$\varepsilon''_c$: the dielectric loss rate of the coating solid content
$\Delta V_w$: the amount of water being increased due to coating
$\Delta V_c$: the amount of the coating solid content in the coating layer being increased due to coating
$f_s$: the resonant frequency in the case with the sample
$P_s$: the resonance peak level in the case with the sample
$\Delta f_s$: the resonant frequency shift amount in the case with the sample and in the blank case
$\Delta W_s$: the resonance peak level variation in the case with the sample and in the blank state
The following formula (5) is obtained based on formulas (1 a) and (3).

$$\Delta f = \Delta f_s - \Delta f_b = K_1[(\varepsilon'_w - 1)\Delta V_w + (\varepsilon'_c - 1)\Delta V_c] \cdots (5)$$

$\Delta f$: the difference in the resonant frequency between the sample and the base material
The following formula (6) is obtained based on formulas (2a) and (4).

$$\Delta W = \Delta W_s - \Delta W_b = K_2 \times (\varepsilon''_w \Delta V_w + \varepsilon''_c \Delta V_c) \cdots (6)$$

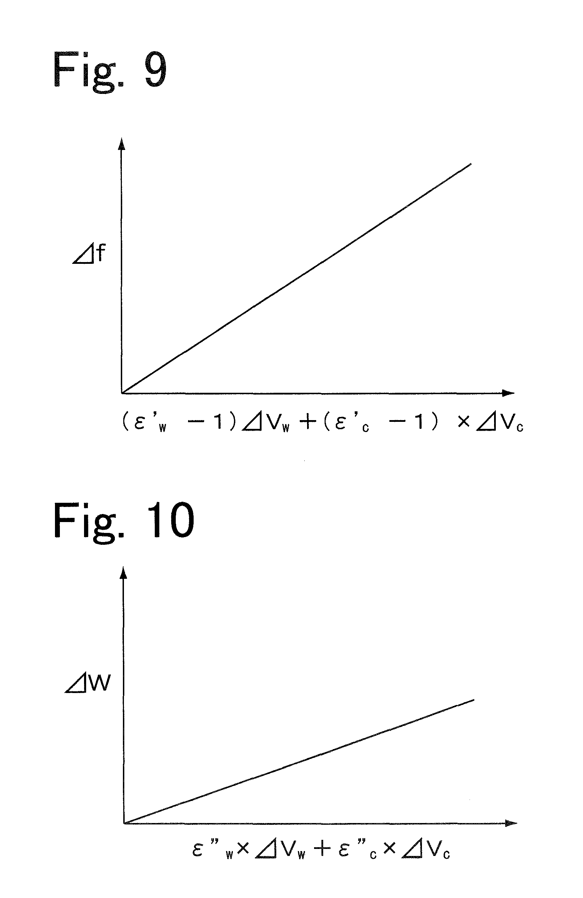

$\Delta W$: the difference in the resonance peak level between the sample and the base material
Constants $K_1$ and $K_2$ in the formulas (5) and (6) are apparatus constants determined by an apparatus such as the resonator. Therefore, when the apparatus constants are obtained in advance, the values $\Delta f$ and $\Delta W$ are measured so that the amount $\Delta Vw$ of water being increased due to coating and an amount $\Delta Vc$ of the coating solid content in the coating layer can be calculated. The moisture content amount and the coating amount of the sample can be obtained based on the calculated values. The amount $\Delta Vw$ of water being increased due to coating and the amount $\Delta Vc$ of the coating solid content in the coating layer are intended accurately as a volume of water and a volume of the coating solid content, but they are corrected by a known specific gravity so as to be capable of being converted into masses. That is to say, the equations (5) and (6) are characteristic equations for $\Delta Vw$ (the amount of water being increased due to coating) and $\Delta Vc$ (the coating solid content in the coating layer).
A procedure for obtaining the constants $K_1$ and $K_2$ is concretely described below.
The resonance curve of the base material that is not provided with the coating layer is measured first. The base material is coated with the coating solution with the amount of the solution being changed, and the base material is dried so that a few reference samples are prepared. The resonance curves of them are measured. A method for obtaining the moisture content amount and the coating amount of each of the reference samples is described. The base material before coating is cut into a constant area and its weight is measured. Weights of the reference samples after coating are also measured. Further, the reference samples after coating are dried for two or more hours by a dryer of 120°C and their weights are measured. The mass that is reduced by drying is related to moisture, namely, a difference in the mass before and after drying is a weight of moisture. Similarly, a difference between the weight after drying and the weight of only the base material is the weight of only the coating layer. The weights are converted into the moisture content amount and the coating amount based on an area of the base material obtained in advance. The amount $\Delta V_w$ of water being increased due to coating and the amount $\Delta V_c$ of the coating solid content are obtained by using a known specific weight based on the obtained moisture content amount and coating amount.
The difference $\Delta f$ between the resonant frequency of the base material and the resonant frequency of the reference sample is plotted along a vertical axis, and [(the dielectric constant of the water $\varepsilon'_w$ - 1) $\times \Delta V_w$ + (the dielectric constant of the coating solid content $\varepsilon_c'$ - 1) $\times \Delta V_c$] is plotted along a horizontal axis. As a result, a graph showing a primary correlation shown in Fig. 9 is obtained. A gradient of the graph represents the constant $K_1$ of the formula (5). Fig. 9 is a diagram of a calibration curve showing a relationship between a dielectric constant and a shift amount of the resonant frequency.
Further, a difference $\Delta_w$ between the resonance peak level of the base material and the resonance peak level of the reference sample is plotted along a vertical axis, (the dielectric loss factor of water $\varepsilon''_w \times \Delta V_w$ + the dielectric loss factor of the coating solid content $\varepsilon''_c \times \Delta V_c$) is plotted along a horizontal axis. As a result, a graph showing a primary correlation shown in Fig. 10 is obtained. A gradient of the graph represents the constant $K_2$ of the formula (6). Fig. 10 is a diagram of a calibration curve representing a relationship between the dielectric loss factor and the variation in the resonance peak level.

The present invention provides two modes including a mode in which these correlations are retained as the calibration curves, and a mode in which the constants $K_1$ and $K_2$ to be obtained based on the correlation are retained. In the mode using the calibration curves, the values $\Delta f$ and $\Delta W$, which are measured and obtained for the sample to be measured whose the moisture content amount and the coating amount are unknown, are assigned to the calibration curve, so that the values $\Delta V_w$ and $\Delta V_c$ are obtained. The moisture content amount and the coating amount are calculated based on these values. In the mode using the constants $K_1$ and $K_2$, the measured and obtained value $\Delta f$ of the sample to be measured is assigned to the formula (5), and the value $\Delta W$ is assigned to the formula (6). As a result, the values $\Delta V_w$ and $\Delta V_c$ are obtained by calculation, and the moisture content amount and the coating amount are calculated based on the obtained values. When online measurement is carried out on the sample whose moisture content amount and the coating amount are unknown, the moisture content amount and the coating amount of the unknown sample can be immediately obtained based on the measured and obtained values $\Delta f$ and $\Delta W$ by using the calibration curves or the constants $K_1$ and $K_2$ obtained in advance.

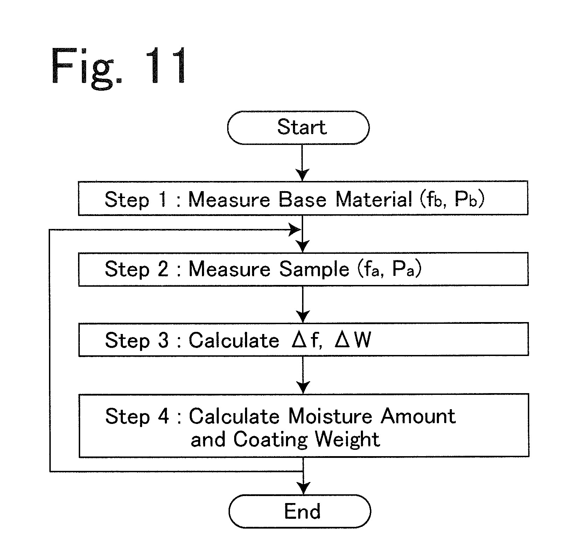

The measurement of the moisture content amount and the coating amount in the present invention is described with reference to a flowchart shown in Fig. 11. Fig. 11 is a flowchart composed of respective measuring and arithmetic steps according to one embodiment.

A resonant frequency fb and a resonance peak level Pb of the base material that is not provided with the coating layer are measured at step 1.

A resonant frequency fs and a resonance peak level Ps of the sample to be measured provided with the coating layer are measured at step 2.

A resonant frequency shift amount $\Delta f$ (= $f_b$ - $f_s$) and a resonance peak level variation $\Delta W$ (= $P_b$ - $P_s$) are calculated at step 3. The values $\Delta f$ and $\Delta W$ can be expressed by the characteristic equations (1) and (2) described before by using a dielectric constant $\varepsilon'$ and a dielectric loss rate $\varepsilon''$ of the sample, and the amount $\Delta V$ of the sample as follows.

$$\Delta f = f_b - f_s = K_1[((\varepsilon'_w - 1)\Delta V_w + (\varepsilon'_c - 1)\Delta V_c) \cdots (1)$$

$$\Delta W = P_b - P_s = K_2 \times (\varepsilon''_w \Delta V_w + \varepsilon''_c \Delta V_c) \cdots (2)$$

$\varepsilon'_w$: the dielectric constant of the water
$\varepsilon''_w$: the dielectric loss rate of the water
$\varepsilon'_c$: the dielectric constant of the coating solid content
$\varepsilon''_c$: the dielectric loss rate of the coating solid content
$\Delta V_w$: the amount of water being increased due to coating
$\Delta V_c$: the amount of the coating solid content in the coating layer

Therefore, the relationships between $\Delta V_w$ and $\Delta V_c$, and between $\Delta f$ and $\Delta W$ expressed by the formulas (1) and (2) are obtained as calibration curves, or the proportionality constants $K_1$ and $K_2$ are calculated. As a result, the moisture content amount and the coating amount are obtained based on the values $\Delta f$ and $\Delta W$ obtained at step 3. Therefore, by obtaining the values $\Delta Vw$ and $\Delta Vc$ of several reference samples in advance by coating a different amount of coating solution on the same base materials and measuring the values $\Delta f$ and $\Delta W$, a calibration curve representing the relationship between both the values is created, or proportionality constants $K_1$ and $K_2$ are determined so that characteristic equations are created.

At step 4, the values $\Delta f$ and $\Delta W$ obtained at step 3 are assigned to the calibration curves or the characteristic equations so that $\Delta V_c$ and $\Delta V_w$ are calculated, and the moisture content amount and the coating amount of the sample to be measured are obtained based on these values. In the case of the online measurement, steps 2 to 4 may be repeated at every constant time.

An effect of isolators is described below.
In the embodiment of Fig. 5, the cavity resonator 1 and the vector network analyzer 40 are connected by the cables 44a and 44b via the isolators 15a and 15b, respectively.

The isolators 15a and 15b are not provided, and the cavity resonator 1 and the vector network analyzer 40 are connected to each other by the cables 44a and 44b, respectively, so that the value $\Delta W$ of the sample is measured. Its result is shown in Table 1.

[Table 1]

| Confirmation of ΔW with various cables | | | |
|---|---|---|---|
| Cable | L Type Adapter | ΔW | |
| | | Coating Sample 1 | Coating Sample 2 |
| (1) | Without | 2.66 | 3.12 |
| | With | 2.83 | 3.31 |
| (2) | Without | 2.70 | 3.15 |
| | With | 2.85 | 3.33 |
| (3) | Without | 2.71 | 3.14 |
| | With | 2.72 | 3.19 |
| (4) | Without | 2.74 | 3.21 |
| | With | 2.61 | 3.08 |

The same cable 44b is used, and any one of four different types of four cables (1) to (4) is used as the cable 44a so that the measurement is carried out. The cables (1) to (4) are as follows.

Cable (1): Length: 1 m
Cable (2): Length: 1 m
Cable (3): Length: 1 m
Cable (4): Length: 1.5 m

The cables (1) to (4) are the same type (grade) of cables. The cables (1) to (3) having the same length are on the market, but their lot number varies. It is considered that these cables (1) to (3) are different due to variation in manufacturing. The cable (4) has a length that is different from the others.

"Without" L type adapter represents a case where the cables 44a and 44b are connected directly to the antennas of the cavity resonator 1 without using an adapter, and "With" L type adapter represents a case where the cables 44a and 44b are connected to the antennas of the cavity resonator 1 by using an L type adapter. The L type adapter is used generally for changing a direction of the cable by 90° , and is normally about 10 to 30 mm, which is shorter than the cable. The L type adapter can sufficiently change a phase of reflected waves.

A "coating sample 1" of the measured sample is a sample where only one layer of the coating layer is coated, and a "coating sample 2" is a sample where two layers of the coating layer are coated.

According to the result in Table 1, both the isolators 15a and 15b are not provided, the value Δ W fluctuates due to only a change in the cable, and fluctuates by maximally about 0.1. When the length of the cables greatly varies, the value ΔW greatly fluctuates, and the value Δ W changes due to a very small change in the length corresponding to a variation in manufacturing such as a difference in the lot number even in products with the same length on the market. When the L type adapter is provided, a fluctuation range of the value Δ W further increases.

The isolator 15a was attached directly to the antenna on the input side of the waveguide of the microwave resonator, and the isolator 15b was not attached to the output side. A result of carrying out the similar measurement in this case is shown in Table 2. As the isolator, a Faraday rotation type isolator (a product made by MTC, type: F169V) was used.

[Table 2]

| Confirmation of effect of isolator | | | |
|---|---|---|---|
| Cable | L Type Adapter | ΔW | |
| | | Coating Sample 1 | Coating Sample 2 |
| (1) | Without | 2.71 | 3.17 |
| | With | 2.70 | 3.18 |
| (2) | Without | 2.69 | 3.16 |
| | With | 2.69 | 3.17 |

(continued)

| Confirmation of effect of isolator | | | |
|---|---|---|---|
| Cable | L Type Adapter | ΔW | |
| | | Coating Sample 1 | Coating Sample 2 |
| (3) | Without | 2.70 | 3.17 |
| | With | 2.69 | 3.17 |
| (4) | Without | 2.69 | 3.16 |
| | With | 2.70 | 3.17 |

The same cable 44b was used in this case as well, and the four different types of cables (1) to (4) were used as the cable 44a so as to carry out the measurement.

"Without" L type adapter represents a case where the cables 44a and 44b are connected directly to the isolator 15a and the antenna on the output side of the cavity resonator 1 without an adapter, and "with" L type adapter represents a case where the cables 44a and 44b are connected to the isolator 15a and the antenna on the output side of the cavity resonator 1 by using the L type adapter.

According to the result in Table 2, even when the cable on the side to be connected to the isolator 15a is changed, the value Δ W hardly fluctuates. Further, the value Δ W hardly fluctuates by presence/non-presence of the L type adapter.

The isolator 15a was attached directly to the antenna on the input side of the waveguide of the microwave resonator, and the similar measurement was carried out in the case where the isolator was not attached to the antenna on the output side and in the case where the isolator 15b was directly attached. A result of the measurement is shown in Table 3.

[Table3]

| Cable | Isolator | | ΔW | |
|---|---|---|---|---|
| | Entrance | Exit | Coating Sample 1 | Coating Sample 2 |
| (1) | With | Without | 2.68 | 3.20 |
| (2) | | | 2.64 | 3.16 |
| (3) | | | 2.65 | 3.17 |
| (4) | | | 2.17 | 2.65 |
| (1) | | With | 2.39 | 2.89 |
| (2) | | | 2.37 | 2.87 |
| (3) | | | 2.38 | 2.89 |
| (4) | | | 2.36 | 2.87 |
| "Entrance" means "Entrance of waveguide". "Exit" means "Exit of waveguide". | | | | |

The cables 44a and 44b, the isolators or the antennas of the waveguide of the cavity resonator are connected by using the L type adapter. In this measurement, each one of the four different kinds of cables (1) to (4) was used as the cable 44b on the output side of the waveguide so as to carry out the measurement.

According to the result in Table 3, when the isolator is provided to the entrance side of the waveguide and the isolator is not provided to the exit side, the value Δ W fluctuates due to replacing of the cable. On the contrary, when the isolator is provided to the entrance side and the exit side of the waveguide like the present invention, even if the cable is replaced, the value Δ W hardly fluctuates.

When the isolator is provided to both the entrance side and the exit side of the waveguide, the measurement with good reproducibility can be carried out on an environmental change like a case where the cable is replaced.

(Comparative Example)

As a comparative example, an example where the isolator is provided directly to the side of the vector network analyzer 40 is illustrated. Therefore, the cable is present between the isolator and the cavity resonator 1. A Faraday rotation type isolator that was the same as the embodiment was used as the isolator. The measured sample is a sample in which only one layer of the coating layer is coated. A result is shown in Table 4.

[Table 4]

| Cable | | ΔW |
|---|---|---|
| Input Side | Output Side | Coating Sample |
| (1) | | 2.68 |
| (2) | Fixed | 2.72 |
| (3) | | 2.85 |
| | | 2.71 |
| Fixed | | 2.77 |
| | | 2.55 |
| Difference | | 0.30 |

The cables (1) to (3) are as follows.

Cable (1): Length: 1.0 m
Cables (2): Length: 1.5 m
Cable (3): Length: 2.5 m

One fixed cable with length of 1.0 m was used.
According to the result in Table 4, when the isolator is provided not to the side of the cavity resonator 1 but to the side of the vector network analyzer 40 and the cable is present between the isolator and the cavity resonator 1, the value ∆ W greatly fluctuates, and thus, the isolator is not useful for obtaining reproducibility.

INDUSTRIAL APPLICABILITY

The present invention can be used for measuring the moisture content amount and the coating amount of the sample provided with the coating layer obtained by coating the base material of a sheet-shaped material including paper, a non-woven fabric, and a film with the coating solution.

DESCRIPTION OF REFERENCE NUMERALS

1: Microwave cavity resonator
2A, 2B: Waveguide
4a, 4b: Resonator portion of waveguide
6a, 6b, 16a, 16b: Traveling wave portion of waveguide portion
8a, 8b: Iris plate
10: Sample
12: Slit
14a, 14b: Antenna
15a, 15b: Isolator
20: Microwave sweep oscillator
22: Wave detecting diode
24: Amplifier and A/D converter
30: Peak level detector
32: Resonant frequency detector

34: Arithmetic part
35: Apparatus constant retaining part
37: Data processing apparatus
40: Vector network analyzer
42: Personal computer

**Claims**

1. A measuring apparatus for a sheet-shaped sample, comprising:

   a microwave cavity resonator having two iris plates formed with a hole in a middle of a waveguide vertical to a tube axis, a portion between the iris plates being a resonator portion, waveguide portions on outsides of the iris plates being first and second traveling wave portions having antennas, a slit for disposing a sheet-shaped sample being provided to the resonator portion so as to cross the waveguide;
   a microwave sweep oscillator for oscillating with a frequency within a predetermined range, the microwave sweep oscillator being connected to a side of the first traveling wave portion;
   a microwave strength receiver connected to a side of the second traveling wave portion;
   a first isolator disposed between the first traveling wave portion and the microwave sweep oscillator only in a direction where a signal is transmitted from the microwave sweep oscillator to an antenna of the first traveling wave portion, the first isolator connected directly to a connector portion of the antenna of the first traveling wave portion without a cable;
   a second isolator disposed between the second traveling wave portion and the microwave strength receiver only in a direction where a signal is transmitted from the antenna of the second traveling wave portion to the microwave strength receiver, the second isolator connected directly to the connector portion of the antenna of the second traveling wave portion via the cable; and
   a data processing apparatus including a peak level detector for receiving a signal from the microwave strength receiver so as to detect a peak level at a resonant frequency, a resonant frequency detector for receiving a signal from the microwave strength receiver so as to detect a resonant frequency, and an arithmetic part for obtaining a moisture amount and a coating amount of a coating layer based on a difference in the peak level detected by the peak level detector between a sample provided with the coating layer on a surface of a sheet-shaped base material and a sample without the coating layer and a difference in the resonant frequency detected by the resonant frequency detector between a sample provided with the coating layer on a surface of a sheet-shaped base material and a sample without the coating layer.

2. The measuring apparatus according to claim 1, wherein
   the data processing apparatus further includes an apparatus constant retaining part for retaining a coefficient for obtaining the moisture content amount and the coating amount of the coating layer as an apparatus constant,
   the arithmetic part calculates the moisture content amount and the coating amount of the coating layer using a peak level detection value detected by the peak level detector and the resonant frequency detected by the resonant frequency detector at a time of measuring an unknown sample and the coefficient retained in the apparatus constant retaining part.

3. The measuring apparatus according to claim 1, wherein
   the data processing apparatus further includes an apparatus constant retaining part for retaining calibration curve data for obtaining the moisture content amount and the coating amount of the coating layer as an apparatus constant,
   the arithmetic part calculates the moisture content amount and the coating amount of the coating layer using the peak level detection value detected by the peak level detector and the resonant frequency detected by the resonant frequency detector at a time of measuring an unknown sample and the calibration curve data retained in the apparatus constant retaining part.

# Fig. 1

Microwave Sweep Oscillator 20

Amplification, A/D Converter 24

# Fig. 2

# Fig. 3

# Fig. 4

# Fig. 5

# Fig. 6

EP 2 743 686 A1

# Fig. 7

# Fig. 8

| Layer of Water Being Increased by Coating |
| :---: |
| Layer of Coating Solid Content Being Increased by Coating |
| Base Material |

# Fig. 9

$\Delta f$

$(\varepsilon'_w - 1)\Delta V_w + (\varepsilon'_c - 1) \times \Delta V_c$

# Fig. 10

$\Delta W$

$\varepsilon''_w \times \Delta V_w + \varepsilon''_c \times \Delta V_c$

# Fig. 11

$$\text{Start}$$

Step 1 : Measure Base Material ($f_b$, $P_b$)

Step 2 : Measure Sample ($f_a$, $P_a$)

Step 3 : Calculate $\Delta f$, $\Delta W$

Step 4 : Calculate Moisture Amount and Coating Weight

$$\text{End}$$

# Fig. 12

(A)

(B)

# Fig. 13

# Fig. 14A

# Fig. 14B

6a

58

14a

54

52

50

62

56    64

59

60

56

15a

<table>
<tr><td colspan="2" align="center"><b>INTERNATIONAL SEARCH REPORT</b></td><td>International application No.<br>PCT/JP2012/070566</td></tr>
</table>

**A. CLASSIFICATION OF SUBJECT MATTER**
*G01N22/04*(2006.01)i, *G01N22/00*(2006.01)i

According to International Patent Classification (IPC) or to both national classification and IPC

**B. FIELDS SEARCHED**

Minimum documentation searched (classification system followed by classification symbols)
G01N22/00-G01N22/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-58379 A (Oji Paper Co., Ltd.),<br>19 March 2009 (19.03.2009),<br>claims 1 to 2; fig. 8<br>(Family: none) | 1-3 |
| Y | JP 2001-349916 A (Shimizu Corp.),<br>21 December 2001 (21.12.2001),<br>fig. 1<br>(Family: none) | 1-3 |
| Y | JP 59-102146 A (Nippon Steel Corp.),<br>13 June 1984 (13.06.1984),<br>fig. 1<br>(Family: none) | 1-3 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 October, 2012 (01.10.12) | Date of mailing of the international search report<br>16 October, 2012 (16.10.12) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005012887 A
- JP 2006349425 A
- JP 2009058379 A
- JP 5580003 A